Europäisches Patentamt

(19) **European Patent Office** ·

Office européen des brevets

(11) Publication number: **0 038 095**
A1

# EUROPEAN PATENT APPLICATION

(21) Application number: 81200347.3

(22) Date of filing: 27.03.81

(51) Int. Cl.³: **G 06 K 19/04**, G 05 B 19/14

(30) Priority: 31.03.80 NL 8001899

(43) Date of publication of application: 21.10.81
Bulletin 81/42

(84) Designated Contracting States: **AT BE CH DE FR GB IT LI LU NL SE**

(71) Applicant: **Tricentrol Benelux B.V., No.3, Kleine Krogt, NL-4825 AN Breda (NL)**

(72) Inventor: **Bouman, Johannes, No. 104 Tweevoren, NL-5672 SH Nuenen (NL)**

(74) Representative: **Schumann, Bernard Herman Johan et al, OCTROOIBUREAU ARNOLD & SIEDSMA Sweelinckplein 1, NL-2517 GK The Hague (NL)**

(54) **Programme unit and punched card for use therewith.**

(57) The invention relates to a programme unit for the programmed control of a device for adjusting the value of a physical quantity, said programme corresponding to a preselected variation of said quantity for a preselected time interval, which in accordance with the invention is characterized by a punched card reading unit for reading a punched card having a programme encoded therein in the form of a configuration of punched holes in preselected positions of an array.

EP 0 038 095 A1

0038095

-1-

Short title: Programme unit and punched card for use therewith.
----------------------------------------------------------------

The invention relates to a programme unit for the programmed control of a device for adjusting the value of a physical quantity, said programme corresponding to a preselected variation of said quantity for a preselected time interval. Such a programme unit, which is intended to adjust the temperature value in a closed space with the aid of a central heating system, is known and comprises read-in means in the form of, for example, push-buttons which serve to load data corresponding to a desired programme. The physical quantity may be: temperature, humidity, the flow rate of a pump in a swimming pool, the light intensity in a room and so on.

The known programme unit has a few disadvantages in practice. When loading the programme data with the aid of the buttons the user has no possibility of checking the correctness of the loading, which may be disadvantageous since the error chance of poorly skilled users is relatively great. Furthermore, the known programme unit should have a random access memory (RAM) of the non-volatile type in order to ensure that the programme will not be erased when mains voltage is interrupted.

The invention has for its object to provide a

0038095

programme unit which offers great flexibility of programming and substantially completely excludes errors, whilst said disadvantages of the prior art are obviated.

This is achieved by a programme unit of the kind set forth, which in accordance with the invention is characterized by a punched card reading unit for reading a punched card having a programme encoded therein in the form of a configuration of punched holes in preselected positions of an array.

The invention has furthermore for its object to provide a programme unit of said type in which copies of the programmes that can be readily interpreted visually are always available. To this end the invention provides in a further embodiment a programme unit in which at least part of said array is rectangular, one direction corresponding to time and the other direction to the value of the quantity to be set so that the configuration of the punched holes constitutes a graph of the programme concerned.

Of practical use is the embodiment in which the preselected time interval is a day and in which a plurality of positions corresponding each to a time interval is present in the longitudinal direction of the punched card and a plurality of positions, each corresponding to a range of values of the magnitude to be set is present in the transverse direction. The number of positions in the longitudinal direction may be 24, in which case the time intervals corresponding to the longitudinal direction each have the duration of one hour. However, any other suitable number, for example 48, may be used. In this case the time intervals each have a duration of half an hour. In accordance with the intended use a more or less refined subdivision may be preferred. The number of positions in the transverse direction may be 7, corresponding in a given embodiment, for example, to a temperature of $18^{\circ}$, $19^{\circ}$, $20^{\circ}$, $21^{\circ}$, $22^{\circ}$, $23^{\circ}$ and $24^{\circ}$C.

In a further embodiment, in the absence of a punched hole a preselected value of the quantity to be set is selected in a position row corresponding to a time interval on a punched card. This preselected value may, for example, be the night temperature of a central heating system.

The invention furthermore provides a punched card for use in a programme unit according to the invention, which may be provided with the desired programme data when manufactured, but in accordance with the invention it is preferred to provide all punched holes with a filling that can be manually pressed out, since in this case a user can set any desired programme in a simple manner. Such a punched card may have potential punched holes in the form of squeezed-in weakened edges or else a comparatively weak layer, for example, an aluminium foil covering a card in which a complete punched hole array is provided.

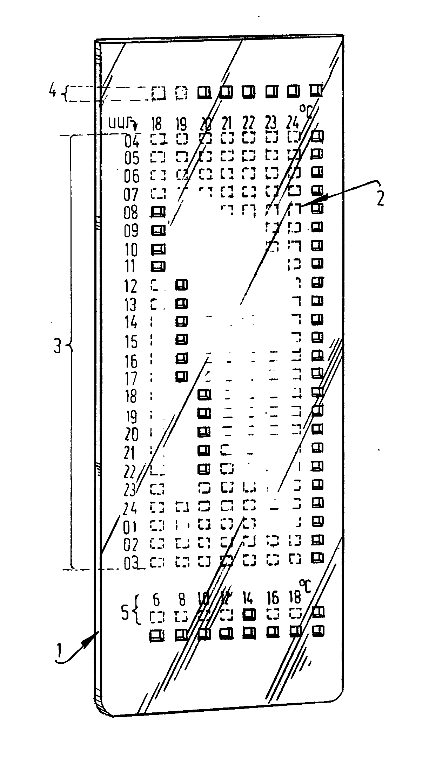

Further features and particular aspects of the invention will be mentioned and explained with reference to the drawing of an embodiment of a punched card according to the invention.

The punched card 1 has an array 2 of potential punched holes indicated by broken lines. In this embodiment a number thereof are realised. These real punched holes are indicated by solid lines.

The array 2 is divided into three parts:

The middle part 3 constitutes the programme proper in the form of real punched holes; in the longitudinal direction 24 positions are available in the array, each of which corresponds to one hour; in the transverse direction 7 positions are available, each corresponding to a step of $1^{\circ}$ C; the Figure clearly shows that the visual impression of the punched card constitutes a reproduction of the variation in time of the physical quantity, in this case the temperature.

The left-hand part 4 is a day compartment and has seven punched holes corresponding to the days of a week during which the programme contained in part 2 has to be operative.

Finally, the right-hand part 5 has a number of potential punched holes for setting the above-mentioned, preselected value of the magnitude which is selected when one of the "value columns" does not exhibit a real punched hole.

The upper row of realised punched holes has the function of parity checking elements.

In the embodiment shown the punched holes in part 4

0038095

correspond from bottom to top to Saturday, Sunday, Monday, Tuesday, Wednesday, Thursday and Friday. The punched holes are realised for Monday to Friday. Therefore, the programme in part 3 is operative for the entire period of consecutive time intervals.

In this embodiment the punched holes in part 5 correspond from bottom to top to a temperature setting of $6^{\circ}$, $8^{\circ}$, $10^{\circ}$, $12^{\circ}$, $14^{\circ}$, $16^{\circ}$ and $18^{\circ}$ C, respectively. Therefore, these values correspond to the temperatures to which is switched over in the absence of a punched hole in a time interval column in the medium part 3. In the embodiment shown the punched hole corresponding to $14^{\circ}$ C is realised in part 5.

The array lines in the transverse direction in the middle part 3 correspond to central instants at 4, 5 ... 2 o"clock. It will be seen that the beginning and the end correspond to 3 o'clock. From the graph of the programme in the form of the realised punched holes the following variation of temperature with time can be simply derived: 22 to 7 h: $14^{\circ}$ C (corresponding to the real punched hole in part 5); 7 to 11: $18^{\circ}$ C; 11 to 17: $19^{\circ}$ C; 17 to 22: $20^{\circ}$ C.

It will be obvious that a programme unit for a plurality of quantities lies within the scope of the invention. It may, for example, be employed in an air-conditioning system for controlling both the temperature and the humidity in a closed space. In this case the array part 3 intended for the programme may be subdivided into a plurality of further parts.

By applying the invention the punched card need only be reintroduced into the punched-card reading unit after any failure of the mains voltage, so that no expensive, non-volatile memory is required, since the programme as such is available as a "hard copy" in the form of the punched card.

It should be noted that the punched-card reading unit may be of a type known per se (mecano-electric, opto-electric).

-1-

## CLAIMS

1.      A programme unit for the programmed control of a
device for setting the value of a physical quantity, said
programme corresponding to a preselected variation of said
quantity for a preselected time interval characterized by
a punched-card reading unit for reading a punched card having
a programme encoded therein in the form of a configuration of
punched holes at preselected positions in an array.

2.      The programme unit as claimed in Claim 1 characterized
in that at least part of said array is rectangular, one
direction corresponding to time and the other direction to
the value of the quantity to be set so that the configuration
of the punched holes constitutes a graph of the programme
concerned.

3.      The programme unit as claimed in Claim 2 characterized
in that the preselected time interval is a day and in that
in the longitudinal direction of the punched card a plurality
of positions each corresponding to a time interval and in the
transverse direction a plurality of positions each corresponding
to a range of values of the magnitude to be set are present.

4.      The programme unit as claimed in Claim 2 or 3
characterized in that in the absence of a punched hole a
preselected value of the quantity to be set is selected in a
row of positions corresponding to a time interval on a
punched card.

5.       A punched card for use in a programme unit as claimed in anyone of the preceding Claims characterized in that the punched holes are all provided with a filling that can be manually pressed out.

6.       The punched card as claimed in Claim 5 characterized by a separate array part for the setting of said selected value of the quantity.

7.       A punched card as claimed in Claim 5 or 6 characterized by a separate array part for the selection of the plurality of preselected time intervals for which the programme concerned should be operative.

4

uur 18 19 20 21 22 23 24 °C

04
05
06
07
08
09
10
11
12
13
14
15
16
17
18
19
20
21
22
23
24
01
02
03

3

2

5 { 6 8 10 12 14 16 18 °C

1

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>FR - A - 2 242 061</u> (SIEMENS A.G.) <br><br> * Figure 1; page 2, line 12 - page 3, line 21 * <br><br> -- | 1-3,6, 7 | G 06 K 19/04 <br> G 05 B 19/14 |
| X | <u>DE - A - 2 234 935</u> (SCHLUETER) <br><br> * Figures 1-6; pages 3-6 * <br><br> -- | 1-3,5 | |
| X | ELECTRICAL MANUFACTURING, vol. 56, December 1955, pages 121-126 New York, U.S.A. "Applying punched cards to time-based programming" <br><br> * Figure 2; pages 121-123 * <br><br> -- | 1-3 | TECHNICAL FIELDS SEARCHED (Int. Cl.³) <br><br> G 06 K 19/00 <br>         19/02 <br>         19/04 <br>         1/06 |
| X | <u>GB - A - 620 261</u> (SHAND) <br><br> * Figures 2,3; page 5, lines 91-117 * <br><br> -- | 1-3 | G 05 B 19/12 <br>         19/14 |
| | <u>US - A - 3 015 424</u> (LAFRAMBOISE) <br><br> * Figures 1-8; column 2, lines 32-64 * <br><br> & NL - A - 252 018 <br><br> -- | 5 | |
| | <u>GB - A - 686 696</u> (POWERS-SAMAS ACCOUNTING MACHINES) <br><br> * Figures 1-6; page 1, line 51 - page 2, line 30 * <br><br> ---- | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |

| | | |
|---|---|---|
| The present search report has been drawn up for all claims | | &: member of the same patent family, corresponding document |
| Place of search <br> The Hague | Date of completion of the search <br> 10-07-1981 | Examiner <br> PESCHEL |

EPO Form 1503.1 06.78